# EUROPÄISCHE PATENTSCHRIFT

(11) **EP 3 172 064 B1**
(45) Veröffentlichungstag und Bekanntmachung des Hinweises auf die Patenterteilung: **10.07.2019**
(21) Anmeldenummer: 15723209.1
(22) Anmeldetag: 13.05.2015
(51) Int. Cl.: B60C 13/00, B60C 19/00, B29D 30/00, B62M 7/12, B62J 99/00, G01P 3/487

(54) **REIFEN**
TYRE
PNEUMATIQUE

(30) Priorität: 21.07.2014 DE 102014214139
(43) Veröffentlichungstag der Anmeldung: 31.05.2017
(73) Patentinhaber: Continental Bicycle Systems GmbH & Co. KG, 65780 Eschborn (DE)
(72) Erfinder: SURMANN, Frank, 63322 Rödermark (DE); WALTER, Horst, 65719 Hofheim (DE); WURMBÄCK, Christian, 34596 Bad Zwesten (DE)
(74) Vertreter: Kilsch, Armin Ralph
(86) Internationale Anmeldenummer: PCT/EP2015/060569
(87) Internationale Veröffentlichungsnummer: WO 2016/012121

(56) Entgegenhaltungen:
- EP-A1- 2 639 085
- WO-A1-2015/041756
- DE-T2-602004 001 129
- JP-A- 2013 107 460
- US-A1- 2007 222 569

## Beschreibung

Die Erfindung betrifft einen Reifen, insbesondere Zweiradreifen, mit einer Einrichtung zur Erzeugung von umdrehungsabhängigen Signalen, bei der die Einrichtung im Reifen angeordnet oder mit dem Reifen verbunden ist und ein signalerzeugendes Element aufweist. Ebenfalls sind ein Verfahren zur Herstellung eines solchen Zweiradreifens und ein System zur Erzeugung von Signalen für die Steuerung eines Zweiradantriebs offenbart.

Üblicherweise benötigen elektrische Antriebe für Zweiräder, beispielsweise E-Bike Motoren, ebenso wie elektronische Fahrradtachometer, Sensoren zur Detektion der Rad- oder Pedalumdrehungen, um daraus u. a. die Geschwindigkeit zu ermitteln. Hierzu gehören natürlich Einrichtungen zur Signalerzeugung für solche Sensoren.

Üblicherweise sind in solchen Systemen Magneten als Impulsgeber (Signalerzeuger) für Sensoren vorgesehen, die als REED-Kontakt, HALL-Sensoren oder ähnliche Sensoren ausgebildet sind. Bei jedem Vorbeilaufen des Magnetes an dem Sensor bekommt z.B. das Tachometer eine Signalinformation und errechnet hieraus Geschwindigkeit, Wegstrecke, Durchschnittsgeschwindigkeit, Teilstrecke etc. Beim E-Bike mit Mittelmotor wird hier z.B. in Europa mit solchen Systemen bei bis zu 25Km/h liegende Motorunterstützung abgeregelt. In den USA liegt der Wert der max. Km/h Unterstützung bei E-Bikes bei 32Km/h.

Üblicherweise wird der signalerzeugende Magnet an einer Speiche im Vorder- und/oder Hinterrad angebracht. Dieser Magnet ist optisch sehr gut sichtbar und verändert das Design negativ. Ebenfalls kann sich der Magnet verdrehen, so dass dann keine Funktion mehr gegeben ist. Ein solcher Speichen-Magnet kann sich durch Unachtsamkeit leicht verdrehen oder verloren gehen und somit den Tacho und/oder auch das gesamte E-Bike Antriebssystem komplett zum Erliegen bringen. Bei Rennrädern erzeugt der Speichen-Magnet eine merkbare Erhöhung des Luftwiderstands und damit einen zusätzlichen Nachteil.

Zur Lösung des Problems wurde bereits überlegt, den Magnet im Gummi der Lauffläche oder Flanke eines Reifens einzuarbeiten. Die WO 2004/057274 A1 offenbart hierzu einen Umdrehungszähler für ein Fahrrad, bei dem ein magnetisches Element in der Symmetrieebene eines Rades innerhalb des Reifens oder eines im Reifen befindlichen Schlauchs eingebracht ist. Das magnetische Element bewegt sich bei jeder Umdrehung des Rades durch den Aufnahmebereich eines am Fahrradrahmen befestigten und auf magnetische Induktion ansprechenden Sensors, so dass die Drehungen gezählt werden können. Das magnetische Element kann auf der Innenseite des Reifens oder Schlauches angeklebt sein. Nachteiligerweise müssen hierbei relativ starke Magnete eingesetzt werden, um eine ausreichende Permeabilität durch die Gummischichten des Reifens oder Schlauches sicherzustellen und ein Signal beim Sensor zu erzeugen.

Vergrößert man den Magneten bis zu dem Punkt, dass eine akzeptable Reichweite erreicht wird, tritt das Problem auf, dass es aufgrund der Größe schwierig wird, den Magneten im Reifen einzubringen. Ein weiteres Problem ist, dass der Magnet im Gummi ein Fremdkörper ist und durch die Walkarbeit des Reifens über kurz oder lang durch die Oberfläche gedrückt wird. Somit ist keine ausreichende Funktion mehr gegeben. Zudem kann der Reifen beschädigt und unbrauchbar werden. Funktionstests mit Prototypen verschiedener eingebrachter Magneten haben dies bestätigt.

Die DE 3911627A1 offenbart eine Beleuchtungsanlage für Fahrräder, bei der in einem Rad des Fahrrades Permanentmagneten integriert sind. In einer Ausführung sind diese Permanentmagneten auf der Innenseite der Lauffläche eines Reifens angebracht und arbeiten mit einem Generator zusammen, der am Rahmen des Fahrrades befestigt ist. Hierbei besteht der Nachteil, dass beim Einbringen von Permanentmagnete in das Gummimaterial des Reifens, d.h. bei der Vulkanisation die magnetischen Eigenschaften ungünstig beeinflusst werden können.

Die Wärme, die bei der Vulkanisation des Reifen erforderlich ist (ca. 180°C über 200 Sekunden), lassen den Energiewert der eingebrachten Magnete sinken, da Magnete bei großer Hitze ihre Magnetwirkung verlieren. Es gibt Magnete die solche Temperaturen vertragen, allerdings sind diese von den Energiewerten zu niedrig um eine sichere Funktion zu gewährleisten.

Die DE 10 2010 042808 A1 offenbart eine andere Lösung, nämlich eine Vorrichtung zur Drehzahlerfassung mit einem an einem Ventil eines Schlauches angeordnetem Magnetstück, dessen Trajektorie durch den Messbereich eines am Rahmen angebrachten Sensors läuft. Nachteilig hierbei ist jedoch, dass das Ventil mittig in der Felge sitzt und somit relativ weit entfernt ist von einem z. B. als REED-Kontakt ausgebildeten Sensor.

Darüber hinaus offenbart die gattungsbildende DE 60 2004 001 129 T2 einen Luftreifen mit einer Auflage an mindestens einem Teil seiner Oberfläche, wobei die Auflage aus zwei Lagen besteht. Die erste Lage ist diejenige in Kontakt mit dem Luftreifen und die zweite Lage ist eine nach außen weisende Auflage oder Deckschicht auf der inneren, ersten Lage. Die innere Lage besteht aus einem Kunststoffschaum, der bestimmte Hohlraumgehalte, eine bestimmte Dicke und eine bestimmte Dichte aufweist. Angebracht auf dem elastomeren Material eines Luftreifens werden hier Kennzeichnungen, Chips oder nicht näher spezifizierte weichen oder harten Gegenstände.

Die WO 2015-041756 A1 offenbart eine Methode zur Befestigung eines Objektes, wie zum Beispiel eine elektronische Einrichtung, an einer Reifenseitenwand. Dabei wird das Objekt so an der Seitenwand angeordnet, dass benachbarte Seitenwandteile über das Objekt hinausragen. Das Objekt selbst bleibt aber sichtbar.

Die JP 2013107460 A offenbart die Gestaltung der Seitenwand eines Reifens zur Aufnahme eines Sensors mithilfe von Vorsprüngen und einem Deckel oder Aufnahmekörper/Adapter

Für die Erfindung bestand daher die Aufgabe, einen Zweiradreifen mit einer Einrichtung zur Erzeugung von umdrehungsabhängigen Signalen bereitzustellen, vorzugsweise für Tachometer oder zur Verwendung in einem Steuerungssystem für einen motorischen Zweiradantrieb, der möglichst unabhängig von Witterungseinflüssen oder Luftwiderstand arbeitet, der einfach herstellbar oder nachrüstbar ist und und der möglichst effektiv mit den erforderlichen Sensoren am Zweiradrahmen zusammenwirkt.

Gelöst wird diese Aufgabe durch die Merkmale des Hauptanspruchs. Weitere vorteilhafte Ausbildungen sind in den Unteransprüchen offenbart.

Dabei ist das signalerzeugende Element in einem mit dem Reifenkörper form- oder kraftschlüssig verbundenen Halteelement aufgenommen, wobei das Halteelement im Wesentlichen außenseitig von Festigkeitsträgern oder Verstärkungselementen des Reifens, insbesondere außenseitig der Reifenkarkasse in oder an der Seitenwand des Reifens angeordnet ist. Das signalerzeugenden Element ist in dem Halteelement so aufgenommen, dass das signalerzeugende Element einen Teil der Außenoberfläche des Reifens bildet oder die Außenoberfläche des Reifens überragt.

Als Basis dient damit der bekannte Zweiradreifen, unabhängig von der Dimension. Bestehende Vulkanisationsformen lassen sich kostengünstig modifizieren, ohne komplett neue Formen herzustellen.

Zudem bleiben die Karkasse und damit der Reifenaufbau und seine Eigenschaften unverändert. Das signalerzeugende Element ist sicher und unveränderbar mit einem drehenden Teil verbunden, kann nicht verdreht werden und ist gegen Witterungseinflüsse bestens geschützt. Wird das signalerzeugende Element erfindungsgemäß am oder im Reifen angebracht, so werden zudem die Kabel vom beispielsweise als REED-Kontakt ausgebildeten Sensor zum Tacho oder zur Steuerungseinheit deutlich verkürzt, was sich nicht nur bei den Kosten niederschlägt, sondern auch für kürzere Montagezeiten sorgt. Zusätzlich ist die Entfernung von signalerzeugendem Element zum Sensor auf das kleinstmögliche Maß reduziert.

Dabei ist das Halteelement als ein das signalerzeugendes Element mindestens teilweise umgebender Wulst oder Schutzring ausgebildet ist. Damit lässt sich ein Abscheren z. B. an Bordsteinen vermeiden. Der Wulst oder Schutzring als Schutz gegen Abscheren kann als Negativform in der Vukanisationsform ausgeführt werden. Dieser Abscherschutz muss im Fahrbetrieb nur zum Untergrund hin vorhanden sein, bzw. an den Stellen der Reifenaußenwand, an denen en Abscheren möglich ist.

Zudem ist das signalerzeugende Element in einem Adapter aufgenommen ist, insbesondere einem Adapter aus verschleißfestem Material, der seinerseits in dem Halteelement aufgenommen ist. Damit erhält man eine ggf. abriebfeste, sichere und auf den Einsatz angepasste Kapselung des signalerzeugenden Elements, was insbesondere dann wichtig ist, wenn im Rahmen einer weiteren vorteilhaften Ausbildung das signalerzeugende Element als relativ "weicher" Permanentmagnet ausgebildet ist. In einer solchen Ausbildung kann dann das signalerzeugende Element mitsamt Adapter einen Teil der Außenoberfläche des Reifens bilden oder die Außenoberfläche des Reifens überragen.

Letztlich ist das signalerzeugende Element lösbar mit dem Adapter verbunden ist, insbesondere mit dem Adapter verschraubt ist. Damit lassen sich evtl. verschlissene signalerzeugende Elemente auf einfachste Art austauschen. Auch ist dadurch ein einfacher Austausch eines z. B. als Magnet ausgebildeten signalerzeugenden Elements durch einen stärkeren Magneten möglich, um einen größeren Weg zu überbrücken. Dies erlaubt einfachere und kundenspezifische Lösungen.

Eine weitere vorteilhafte Ausbildung besteht darin, dass das Material des Halteelements dem Reifenmaterial entspricht und mit dem Reifen durch Vulkanisation oder Klebung verbunden ist. Das erleichtert die Herstellung und sorgt für sichere und unlösbare Verbindung. Eine solche stoffschlüssige Kombination lässt sich sowohl in die übliche Herstellung integrieren als auch besonders gut bei nachträglicher Montage handhaben.

Eine weitere vorteilhafte Ausbildung besteht darin, dass das Halteelement als Profilteil, Profilstollen oder Seitenwandverstärkung des Reifens ausgebildet ist. Mit einer solchen Ausbildung lässt sich das signalgebende Element und das Halteelement so gestalten, dass es innerhalb der normalen Reifengestaltung/des Reifendesigns kaum auffällt.

Eine weitere vorteilhafte Ausbildung besteht darin, dass das Halteelement, ggf. Adapter und signalerzeugendes Element einen Spike bilden. Bekannte Spikes weisen eine plattenförmige Wurzel auf, mit welcher der Spike im Reifen verankert ist und die den größten Durchmesser der Spiketeile aufweist. Die Wurzel ist üblicherweise über einen Halsteil mit einem Spikeoberteil verbunden, wobei der Spikeoberteil üblicherweise aus einem dickeren Spiketeil und einer demgegenüber verjüngten Spikespitze besteht, welche üblicherweise aus der Oberfläche/Lauffläche des Reifens herausragt. Alle Teile des in die Lauffläche eingebrachten Körpers sind zylinderförmig, besitzen also zwei Grundflächen, die parallel, eben, kongruent und durch eine Mantelfläche miteinander verbunden sind. Die Grundflächen können hierbei unterschiedliche Formen, beispielsweise die eines Kreises, eines Dreiecks, eines Quadrats, eines Rechtecks oder eines Ovals, aufweisen.

Im Zusammenspiel mit der Ausbildung, bei der dass das signalerzeugende Element lösbar mit dem Adapter verbunden ist, insbesondere mit dem Adapter verschraubt ist, kann man den Spike auch aus zwei Teilen zusammenschrauben. Der Spike Kopf selber hat in seinem Schaft dann eine Gewindebohrung. Diese dient zum Einschrauben z.B. eines Magneten. Der Magnet ist so ausgeführt dass er mittels eines Gewindes direkt in den Spike Kopf eingeschraubt werden kann. Form und Größe sind je nach Einsatz veränderbar.

Eine weitere aufgrund seine Einfachheit vorteilhaftes Verfahren zur Herstellung eines erfindungsgemäßen Zweiradreifens besteht darin, dass das insbesondere in Form eines Spike ausgebildete signalerzeugende Element, ggf. mit Adapter, mit Hilfe einer Pistole in die am Reifen bereits vorgesehene Halterung eingeschossen wird, wie dies auch mit herkömmlichen Spikes geschieht, die zur Erhöhung der Haftung bei Eis und Schnee in der Lauffläche angeordnet sind.

Besonders vorteilhaft lässt sich der erfindungsgemäße Zweiradreifen in einem System zur Erzeugung von Signalen zur Steuerung des Antriebs eines Zweirads verwenden, bei dem das Zweirad mindestens einen erfindungsgemäßen Zweiradreifen aufweist und bei dem am Rahmen des Zweirads, insbesondere an einer Gabel, Hinterbau oder Schwinge, ein Sensor in der Nähe des Zweiradreifen so angeordnet ist, dass er die umdrehungsabhängigen Signale des im Zweiradreifen angeordneten signalerzeugenden Elements detektiert und der Steuerung als Eingangssignal zur Verfügung stellt.

Natürlich kann der erfindungsgemäße Reifen mit seinem signalerzeugenden Element auch ohne Weiteres für andere Fahrzeuge als für zweirädrige Fahrzeuge genutzt werden.

Anhand eines Ausführungsbeispiels soll die Erfindung näher erläutert werden. Es zeigen
- Fig. 1: eine Skizze eines erfindungsgemäßen Zweiradreifens mit aufgeklebter Einrichtung zur Erzeugung von umdrehungsabhängigen Signalen
- Fig. 2: eine Skizze eines erfindungsgemäßen Zweiradreifens mit einvulkanisierter Einrichtung zur Erzeugung von umdrehungsabhängigen Signalen
- Fig. 3: eine Skizze einer vergrößerte Darstellung der Ausgestaltung gemäß Fig. 2
- Fig. 4: eine Skizze eines Adapters einer Ausführung, bei dem Halteelement, Adapter und signalerzeugendes Element einen Spike bilden
- Fig. 5: eine Prinzipskizze einer Ausführung, bei dem das signalerzeugende Element lösbar mit dem Adapter verbunden ist.
- Fig. 6a bis 6c: eine Ausführung eines erfindungsgemäßen Zweiradreifens, bei dem das Halteelement als ein das signalerzeugendes Element umgebender Wulst oder Schutzring ausgebildet ist

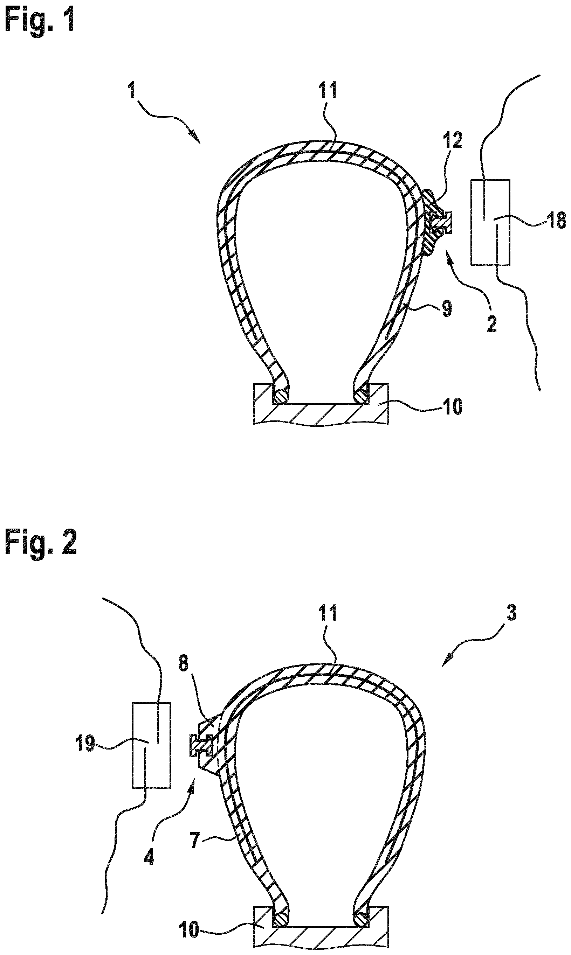

Fig. 1 zeigt skizziert einen Zweiradreifen 1 auf einer Felge 10 im Schnitt, mit einer Einrichtung 2 zur Erzeugung von umdrehungsabhängigen Signalen, bei der die Einrichtung 2 mit der Reifenseitenwand 9 durch Klebung verbunden ist. Fig. 2 zeigt einen entsprechenden Zweiradreifen 3 im Schnitt, bei der eine Einrichtung 4 zur Erzeugung von umdrehungsabhängigen Signalen mit der Reifenseitenwand 7 durch Vulkanisation verbunden ist.

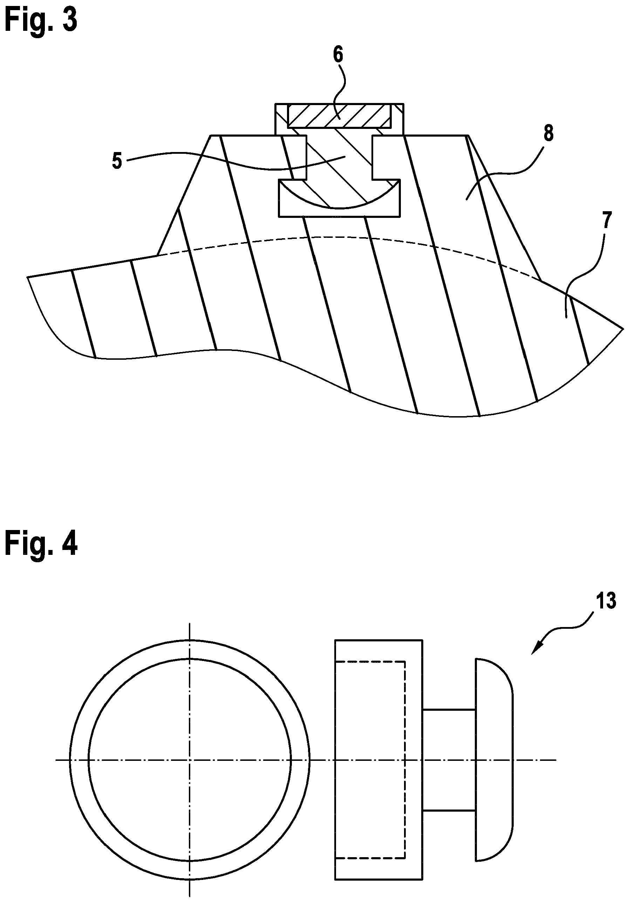

Fig 3 zeigt, ebenfalls im Schnitt und als Skizze, eine vergrößerte Darstellung der Ausgestaltung. Man sieht zunächst das als Permanentmagnet ausgebildete und in einem Adapter 5 aufgenommene signalerzeugende Element 6, wobei hier das signalerzeugende Element 6 zusammen mit dem Adapter 5 aus verschleißfestem Material in einem mit dem Reifenkörper bzw. der Reifenseitenwand 7 kraftschlüssig durch Vulkanisation verbundenem Halteelement 8 aufgenommen sind.

Das Halteelement 8 ist ebenso wie das Halteelement 12 im Wesentlichen außenseitig der Reifenkarkasse 11 in oder an der Seitenwand 7, 9 des Reifens angeordnet ist und das signalerzeugenden Element 6 in dem Halteelement so aufgenommen ist, dass das signalerzeugende Element 6 die Außenoberfläche des Reifens überragt. Das Material der Halteelemente 8 und 12 entspricht dem Seitenwandmaterial, ist also aus Gummi hergestellt. Die Halteelemente 8 und 12 sind dabei als Seitenwandverstärkung ausgebildet.

Fig. 4 zeigt als Skizze noch einmal einen weiteren Adapters 13, hier ohne eingesetzten Magneten als signalerzeugendes Element, ausgebildet für eine Ausführungsform, bei dem Halteelement, ggf. Adapter und signalerzeugendes Element einen Spike bilden.

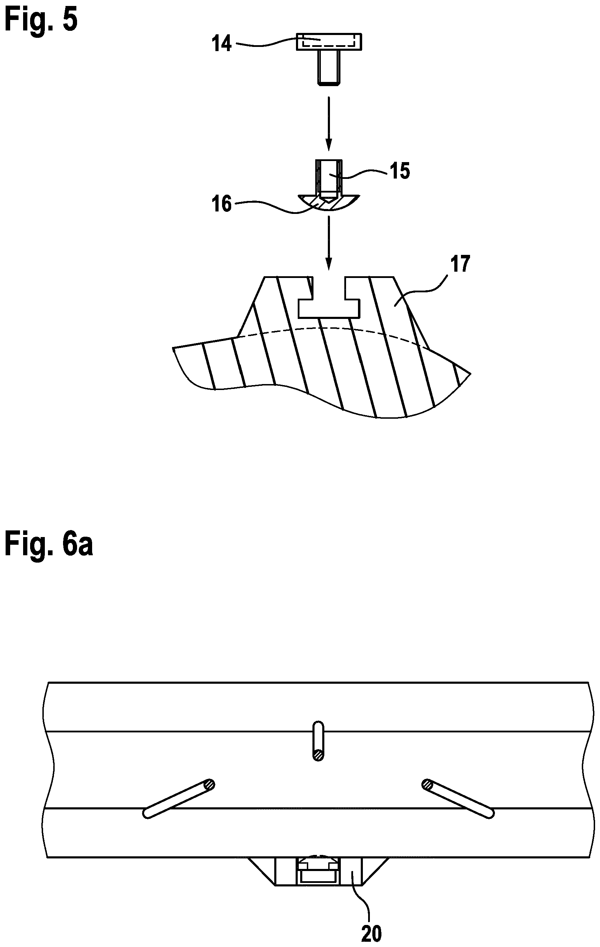

Fig. 5 zeigt als Prinzipskizze eine Ausführung, bei dem das als Magnet ausgebildete signalerzeugende Element 14 lösbar, nämlich schraubbar, mit dem Adapter 15 verbunden ist. Hierbei weist das signalerzeugende Element 14 an einem Teil seines Umfangs ein Außengewinde auf, während der Adapter 15 mit einem Innengewinde versehen ist und einem verdickten Kopf 16 der in der komplementären Ausnehmung der Halterung 17 eingerastet werden kann.

Das kann auch automatisiert geschehen. Hierzu werden zunächst Adapter 15 und Signalerzeugung des Elements 14 miteinander verschraubt. Danach wird das so verschraubte Teil mithilfe einer besonders gestalteten Pistole in die Ausnehmung der Halterung 17 geschossen.

Das gesamte System ist andeutungsweise in den Fig. 1 und 2 erkennbar. Das an einem nicht näher dargestellten Zweirad verwendete System weist einen erfindungsgemäßen Zweiradreifen 1, 3 auf sowie einen an einer ebenfalls nicht näher dargestellten Gabel oder Schwinge angeordneten Sensor 18, 19, der die umdrehungsabhängigen Signale des signalerzeugenden Elements detektiert und der Steuerung als Eingangssignal zur Verfügung stellt.

Die Fig. 6a bis 6c zeigen die Ausführung des erfindungsgemäßen Zweiradreifens, bei dem das Halteelement als ein das signalerzeugendes Element und den Adapter teilweise umgebender Wulst oder Schutzring 20 ausgebildet ist. Damit lässt sich ein Abscheren z. B. an Bordsteinen vermeiden.

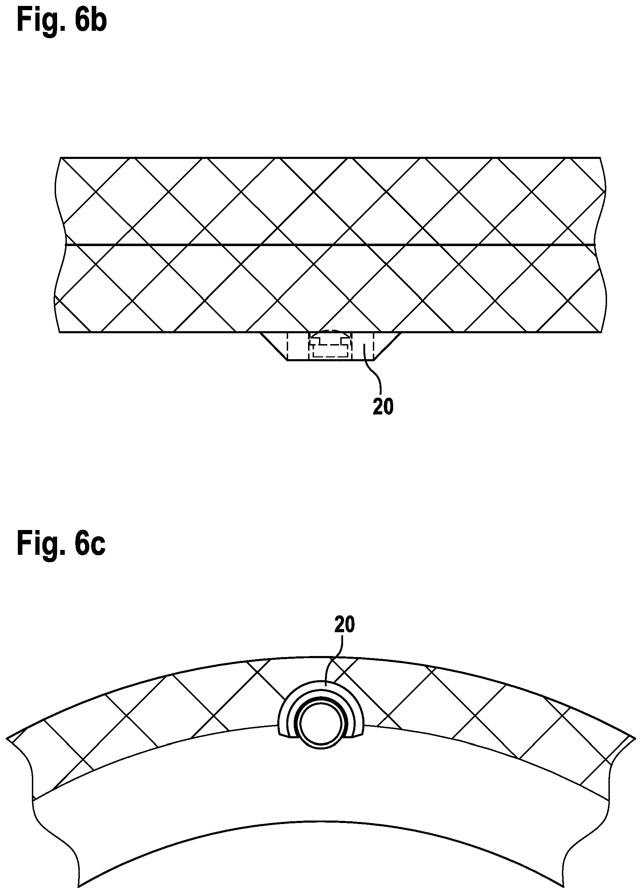

Die Figur 6C zeigt dabei eine Seitenansicht des erfindungsgemäßen Zweiradreifens, bei dem der Wulst 20 im Übergangsbereich zwischen Lauffläche und Seitenwand angeordnet ist. In der hier gezeigten Ausführung ist der Wulst so angeordnet, dass er bei Drehung des Zweiradreifens immer zum Untergrund hin orientiert ist, so dass ein etwaiges Anstoßen an Bordsteine oder Kanten von Straßenunebenheiten nicht zur Schädigung des signalerzeugenden Elements führt. Die Figur 6B zeigt eine Ansicht von oben auf den Laufstreifen. Auch hier ist der vorspringende Wulst 20 gut zu erkennen. Die Figur 6A zeigt eine Ansicht sich aus der Radebene heraus, also etwa von der Radnabe gesehen zur Felge.

Dieser Abscherschutz ist bei dieser Ausführung im Fahrbetrieb nur zum Untergrund hin vorhanden, also nur an den Stellen der Reifenaußenwand, an denen ein Abscheren überhaupt auftreten kann.

### Bezugszeichenliste

### (Teil der Beschreibung)

- 1: Zweiradreifen
- 2: Einrichtung zur Erzeugung umdrehungsabhängiger Signale
- 3: Zweiradreifen
- 4: Einrichtung zur Erzeugung umdrehungsabhängiger Signale
- 5: Adapter
- 6: Signalerzeugendes Element
- 7: Reifenseitenwand
- 8: Halteelement
- 9: Reifenseitenwand
- 10: Felge
- 11: Reifenkarkasse
- 12: Halteelement
- 13: Adapter
- 14: Signalerzeugendes Element
- 15: Adapter
- 16: Verdickter Kopf des Adapters
- 17: Halteelement
- 18: Sensor
- 19: Sensor
- 20: Wulst oder Schutzring

## Patentansprüche

1. Reifen, insbesondere Zweiradreifen (1,3), mit einer Einrichtung zur Erzeugung von umdrehungsabhängigen Signalen (2, 4), bei der die Einrichtung im Reifen (1, 3) angeordnet oder mit dem Reifen verbunden ist und ein signalerzeugendes Element (6, 14) aufweist, wobei das signalerzeugende Element (6, 14) in einem mit dem Reifenkörper form- oder kraftschlüssig verbundenen Halteelement (8, 12, 17) aufgenommen ist, wobei das Halteelement (8, 12, 17) im Wesentlichen außenseitig von Festigkeitsträgern oder Verstärkungselementen des Reifens, insbesondere außenseitig der Reifenkarkasse (11) in oder an der Seitenwand (7, 9) des Reifens angeordnet ist und das signalerzeugenden Element (6, 14) in dem Halteelement (8, 12, 17) so aufgenommen ist, dass das signalerzeugende Element (6, 14) einen Teil der Außenoberfläche des Reifens bildet oder die Außenoberfläche des Reifens überragt **dadurch gekennzeichnet, dass** das Halteelement als ein das signalerzeugende Element mindestens teilweise umgebender Wulst oder Schutzring (20) ausgebildet ist, wobei das signalerzeugende Element (6, 14) in einem Adapter aufgenommen ist, insbesondere einem Adapter aus verschleißfestem Material, der seinerseits in dem Halteelement aufgenommen ist, und wobei das signalerzeugende Element (6, 14) lösbar mit dem Adapter verbunden ist, insbesondere mit dem Adapter verschraubt ist.

2. Reifen, insbesondere Zweiradreifen nach Anspruch 1, bei dem das signalerzeugende Element (6, 14) als Permanentmagnet ausgebildet ist.

3. Reifen, insbesondere Zweiradreifen nach einem der Ansprüche 1 oder 2, bei dem das Material des Halteelements (8, 12, 17) dem Reifenmaterial entspricht und mit dem Reifen durch Vulkanisation oder Klebung verbunden ist.

4. Reifen, insbesondere Zweiradreifen nach einem der Ansprüche 1 bis 3, bei dem das Halteelement (8, 12, 17) als Profilteil, Profilstollen oder Seitenwandverstärkung des Reifens ausgebildet ist.

5. Reifen, insbesondere Zweiradreifen nach einem der Ansprüche 1 bis 4, bei dem Halteelement, ggf. Adapter und signalerzeugendes Element einen Spike bilden.

## Claims

1. Tyre, in particular bicycle tyre (1, 3), having a device for generating revolution-dependent signals (2, 4), in which the device is arranged in the tyre (1, 3) or is connected to the tyre and has a signal-generating element (6, 14), the signal-generating element (6, 14) being received in a holding element (8, 12, 17) which is connected in a positively locking or non-positive manner to the tyre body, the holding element (8, 12, 17) being arranged substantially on the outer side of reinforcement materials or reinforcing elements of the tyre, in particular on the outer side of the tyre carcass (11) in or on the side wall (7, 9) of the tyre, and the signal-generating element (6, 14) being received in the holding element (8, 12, 17) in such a way that the signal-generating element (6, 14) forms a part of the outer surface of the tyre or protrudes beyond the outer surface of the tyre, **characterized in that** the holding element is configured as a bead or protective ring (20) which surrounds the signal-generating element at least partially, the signal-generating element (6, 14) being received in an adapter, in particular an adapter which is made from wear-resistant material and for its part is received in the holding element, and the signal-generating element (6, 14) being connected releasably to the adapter, in particular being screwed to the adapter.

2. Tyre, in particular bicycle tyre according to Claim 1, in which the signal-generating element (6, 14) is configured as a permanent magnet.

3. Tyre, in particular bicycle tyre according to either of Claims 1 and 2, in which the material of the holding element (8, 12, 17) corresponds to the tyre material and is connected to the tyre by way of vulcanization or adhesive bonding.

4. Tyre, in particular bicycle tyre according to one of Claims 1 to 3, in which the holding element (8, 12, 17) is configured as a profile part, tread bar or sidewall reinforcement of the tyre.

5. Tyre, in particular bicycle tyre according to one of Claims 1 to 4, in which the holding element, possibly the adapter and the signal-generating element form a spike.

## Revendications

1. Pneu, notamment pneu de bicyclette (1, 3), pourvu d'un système destiné à générer des signaux (2, 4) dépendant des tours, pour lequel le système est placé dans le pneu (1, 3) ou est relié avec le pneu et comporte un élément générateur de signaux (6, 14), l'élément générateur de signaux (6, 14) étant logé dans un élément de retenue (8, 12, 17) relié par complémentarité de forme ou de force avec le corps de pneu, l'élément de retenue (8, 12, 17) étant placé essentiellement sur la face extérieure de supports de résistance ou d'éléments de renfort du pneu, notamment sur la face extérieure de la carcasse de pneu (11), dans ou sur la paroi latérale (7, 9) du pneu et l'élément générateur de signaux (6, 14) étant logé dans l'élément de retenue (8, 12, 17), de telle sorte que l'élément générateur de signaux (6, 14) forme une partie de la surface extérieure du pneu ou déborde de la surface extérieure du pneu, **caractérisé en ce que** l'élément de retenue est conçu sous la forme d'un bourrelet ou d'une bague protectrice (20) entourant au moins en partie l'élément générateur de signaux, l'élément générateur de signaux (6, 14) étant logé dans un adaptateur, notamment un adaptateur en un matériel résistant à l'usure, qui pour sa part est logé dans l'élément de retenue et l'élément générateur de signaux (6, 14) étant associé de manière amovible avec l'adaptateur, notamment vissé sur l'adaptateur.

2. Pneu, notamment pneu de bicyclette selon la revendication 1, pour lequel l'élément générateur de signaux (6, 14) est conçu sous la forme d'un aimant permanent.

3. Pneu, notamment pneu de bicyclette selon l'une quelconque des revendications 1 ou 2, pour lequel le matériel de l'élément de retenue (8, 12, 17) correspond au matériel du pneu et est relié avec le pneu par vulcanisation ou collage.

4. Pneu, notamment pneu de bicyclette selon l'une quelconque des revendications 1 à 3, pour lequel l'élément de retenue (8, 12, 17) est conçu sous la forme d'une pièce profilée, d'un crampon profilé ou d'un renfort de paroi latérale du pneu.

5. Pneu, notamment pneu de bicyclette selon l'une quelconque des revendications 1 à 4, pour lequel l'élément de retenue, le cas échéant l'adaptateur et l'élément générateur de signaux forment une pointe.
